# EUROPEAN PATENT APPLICATION

(11) **EP 2 277 750 A1**
(43) Date of publication of application: **26.01.2011**
(21) Application number: 10075219.5
(22) Date of filing: 28.05.2010
(51) Int. Cl.: B60R 25/02

(54) **Armor-plated mechanical antitheft steering lock for automotive vehicles.**

(30) Priority: 22.07.2009 IT BA20090039 U
(71) Applicant: Zammito, Roberto, 70054 Giovinazzo (BA) (IT)
(72) Inventor: Zammito, Roberto, 70054 Giovinazzo (BA) (IT)

(57) **Abstract**

The auxiliary mechanical steering lock antitheft device for motor vehicles includes a fixed support (4) that houses a lock (5) with sphere (6) activation-deactivation key (12) and an inclined dragging pin (2), a fork slider (1) with shaped section (1') that inserts itself on the shaped axle with the same prismatic instead of circular section (1") of the steering column (10) to prevent the rotation of the column of said steering.

Unlike the steering lock devices of the known technique the new steering lock device differs from all the others existing on the market, because the blocking of the steering column is carried out by a fork slider (1) that inserts itself directly on the square axle (1") of the steering column (10), inhibiting its rotation.

This solution, unlike the type bush-pin of the known technique allows the normal collapse of the steering column in case of accident, while in the type bush-pin the collapse is prevented by the bush fixed on the steering column, causing further risks to the driver of the vehicle in case of accident.

It can be combined with other electrical-electronic antitheft devices,

## Description

This invention refers to a mechanical antitheft device for motor vehicles and motorcycles, in particular to an auxiliary mechanical steering lock antitheft device for motor vehicles.

Said device subject of this invention evolves with respect to the previous mechanical antitheft devices resuming their advantages with respect to the drawbacks of the electronic devices in use depending on external electrical energy sources.

The axial sliding devices of the previous state of the known technique are used usually to drive a pin in a hole and lock its position. The devices that lock the steering of the motor vehicles and in particular for the motor vehicle "SMART", consist of a sliding pin, provided with a lock, that drives itself in an additional bush applied on the axle of the steering column that prevents its rotation. An evolution of this device that forms part of this invention lies in blocking the rotation of the axle by means of a fork slider.

The objective that the innovation, that constitutes the subject of this invention, intends to achieve is that to prevent the rotation of the steering column by means of a fork that inserts itself on the axle of the steering column in the shape of a prismatic instead of a circular, cylindrical section.

The new steering lock of the invention differs from all the other existing on the market, because the locking of the steering column is given by a fork slider that insert itself directly on the square axle of the steering column, inhibiting its rotation. This solution, unlike the type bush-pin, allows moreover the normal collapse of the steering column in case of accident, whereas in the type bush-pin the collapse is prevented by the bush fixed on the steering column, causing further risks to the driver of the vehicle in case of accident. The insertion of the fork slider is driven by the dragging pin unique in its kind for geometry and function, through its inclined plane.

Another peculiarity of the device of the invention is the position of the fixed covering different with respect to the other antitheft devices present on the market are all positioned at 90° with respect the axle of the steering column, whereas in this device the fixed part is placed at 35°, thus avoiding the alteration of the structure of the dashboard of the vehicle (easing also the installation), that is necessary for the other devices.

Further characteristic of the above mentioned antitheft device is given by the installation/montage of the antitheft device system to the steering column, that occurs in a quick and easy way; in fact to install/assembly the antitheft device, it is not necessary to drill, weld or remove the column itself, keeping the absolute originality and functionality of the steering column.

This invention has as object an auxiliary mechanical steering lock antitheft device that has the aim to inhibit the rotation of the steering when this is not authorized, in addition to the possible steering lock usually installed by the manufacturer.

Usually the installation of an auxiliary mechanical steering lock is complex because of the many differences and complexities of the steering columns and the dashboards of the motor vehicles of the different manufacturers, taking into account also the necessity to meet use's wishes, so that the operation of the antitheft device itself be of easy and handy use by the motorist.

The steering lock subject of this invention has the aim to solve these problems, supplying a product that inhibits the not authorized rotation of the steering and furthermore of easy installation and handy use.

In fact a further advantage of the device is that to provide for an antitheft device that can be installed in an easy and quick way avoiding the removal of the steering column of the vehicle on which it is installed.

All the above mentioned aims are met by the subject antitheft device that can be marketed also as assembly kit already predisposed for the installation on the motor vehicle.

The antitheft device of the invention consists essentially of an axial sliding lock, including a sphere with controlled insertion, to block a fork, pushed by a dragging pin, on the square axle of the steering column of the motor vehicle, inhibiting its turn and that is in fact driven by said lock.

In fact the aim is to prevent the rotation of the steering column by means of a fork that inserts itself directly on the axle of the steering column in shape of a prismatic instead of a circular section to implement its block preventing its rotation.

More precisely this invention refers to a mechanical steering lock antitheft device for motor vehicles including means of drive, control and lock of a blocking slider of the steering column, characterized by the fact that said blocking slider consists of a fork bracket, driven by a pin dragging a hardened jaw support, said fork purposely shaped with prismatic section and that said steering column shows identical prismatic section, at least along one of its parts, to receive the insertion of said fork to prevent its rotation.

In particular it also foresee a mechanical steering lock antitheft device for motor vehicles, **characterized in that** it includes a fixed support on which a mobile axial sliding hardened lock is arranged, a sphere with controlled insertion, driven by said mobile hardened lock, to block said fork slider, pushed by a dragging pin, on the square axle of the steering column of a motor vehicle, the blocking of the steering column provided by said fork slider that inserts itself directly on the square axle of said steering column, preventing its rotation.

The invention foresees subordinately also a mechanical steering lock antitheft device for motor vehicles, characterized by the fact that it does not need for this operation any electrical or electronic means of insertion or control and of supply of energy from external sources.

Likewise it foresees a mechanical steering lock antitheft device for motor vehicles, characterized by the fact that it is arranged with a slope ranging within 25° and 45° with respect to the axle of the steering column to easy its installation and at the same time to avoid the tampering of the structure of the structure of the part below the steering of the motor vehicle.

Finally in another form of execution the mechanical steering lock antitheft device for motor vehicles foresees the axle of the dragging pin, having a particular geometry suitable to push the fork slider to cause the insertion of the axle of the steering column through its inclined plane, arranged with slope of 73° with respect to the axis of said fork slider a, to avoid the tampering of the structure of the dashboard of the motor vehicle helping also its installation, that results otherwise irremediable necessary for the other devices.

The device is provided with a foldable key, that with its particular shape easies to activate and deactivate the antitheft device, not interfering with the motorist during the driving giving him the greatest comfort.

The mechanical steering lock antitheft device for motor vehicles characterize itself also by the fact to foresee in addition one or more optional equipments alone or in combination among them, like electronic anti-starting device, ultrasound or proximity photocell, anti-lifting device, satellite positioning or localizing device, anti-robbery warning, pager, sound warning.

It finds particular use as mechanical steering lock hardened antitheft device for motor vehicles as support of antitheft protection against the fraudulent burglaries, in a simple, safe, reliable, independent form, autonomous from any control mean or external supply of energy.

We give here below a detailed anyway not limiting description of the invention with reference to some preferred forms of execution with reference to the following figures.

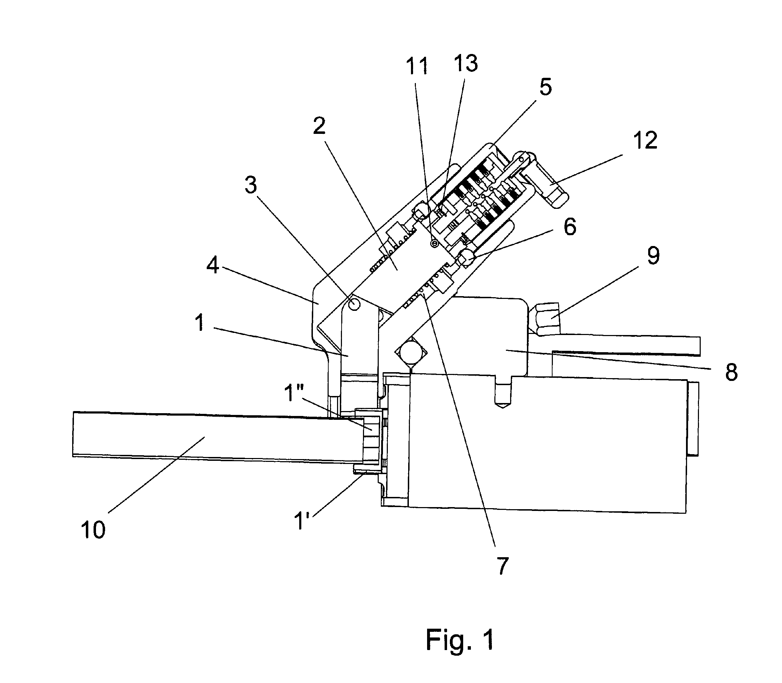

- Figure 1 shows a longitudinal section of the steering lock antitheft device of the invention installed on the steering column;

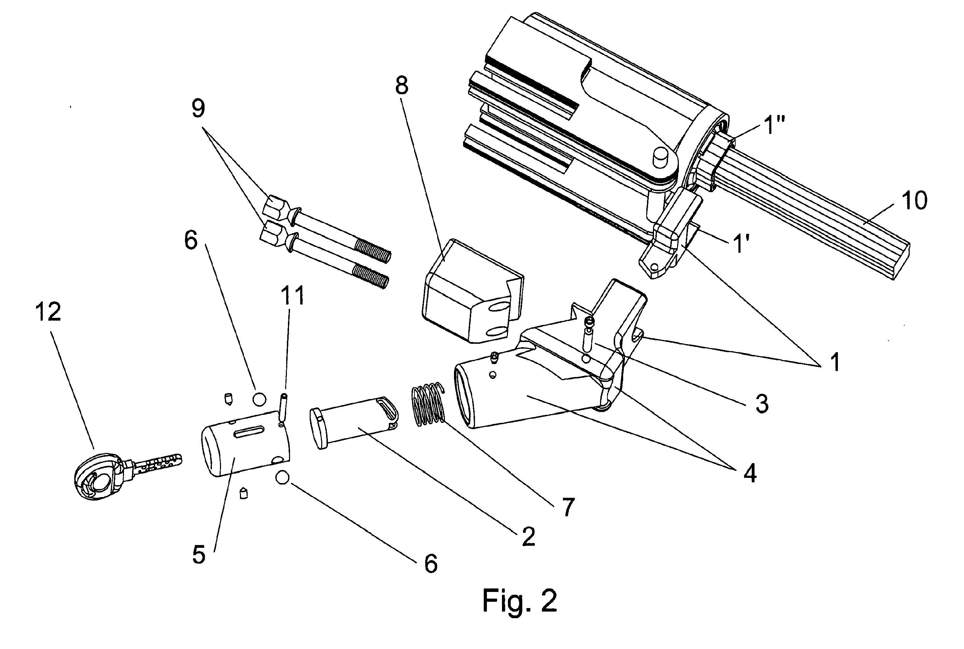

- Figure 2 shows a detailed exploded view showing the parts making up the antitheft device;

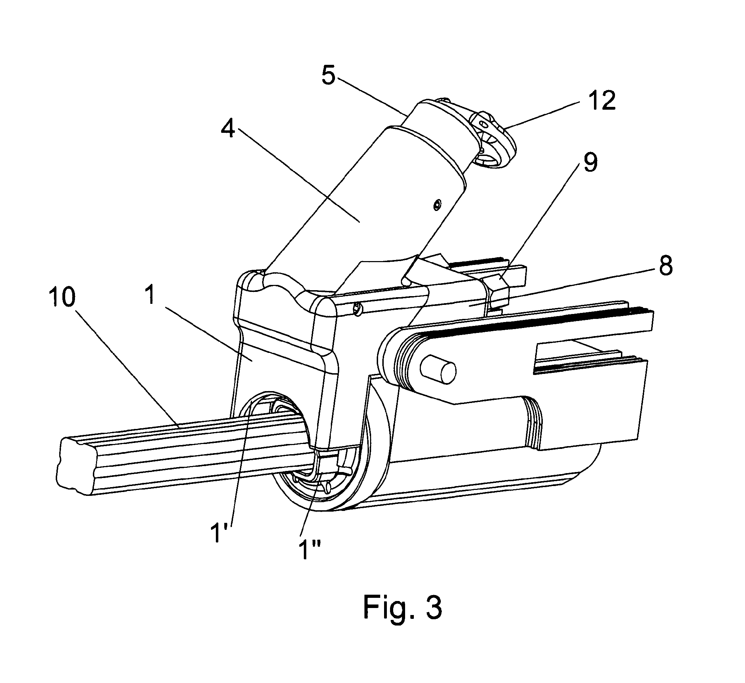

- Figure 3 shows an axonometric view of the antitheft device showing the fork coupling on the steering column with prismatic section;

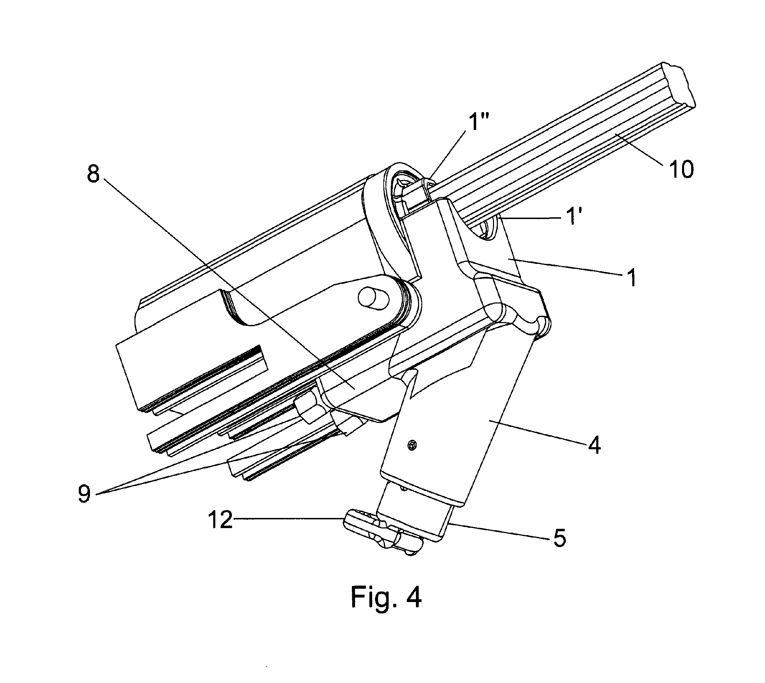

- Figure 4 shows an axonometric view of the antitheft device of the invention applied to the steering column of the vehicle.

The device subject of the invention consists mainly of a mobile hardened shell and a fixed support 4.

Inside the mobile shell a lock with foldable key 12 is keyed allowing the blocking.

The whole of the mobile hardened shell and the lock form the padlock 5.

The blocking of the steering column 10 occurs through a fork slider 1 shaped 1' that inserts itself directly on the square axle 1" of the steering column 10, inhibiting its rotation.

The intended action is to prevent the rotation of the steering column through the fork 1, 1' that inserts itself on the axle 10, 1" of the steering column shaped as prismatic instead of circular section.

The blocking of the steering column 10 caused by said fork slider 1 that inserts itself 1' directly on the square axle 1" of the steering column 10, prevents its movement of turn. This solution, unlike the type bush-pin, allows the normal collapse of the steering column in case of accident, whereas in the type bush-pin the collapse is prevented by the bush fixed on the steering column, causing further risks to the driver of the vehicle in case of accident.

The device as said before consists mainly of a mobile hardened shell arranged inside a fixed support 4. Inside the mobile shell a lock is keyed allowing the blocking.

By the side of the mobile hardened shell there is a hole, inside which a sphere 6 is arranged, driven by the end of the rotor of the lock, that comes out from or in to the mobile hardened shell.

To close the mobile shell, there are a dragging pin 2 and a cylindrical pressure spring 7.

The dragging pin 2 has the function to push the fork slider 1, through its inclined plane and therefore to activate the antitheft device.

Between the fork slider 1, the dragging pin 2 and the steering column 10, there is a pin with ground stem that has the function to drive the fork slider during the phase of deactivation of the antitheft device, bringing it to the correct rest position.

The cylindrical pressure spring 7, situated between the dragging pin 2 and the support 4, has the function to push the mobile shell outside the fixed one at the moment when the antitheft device is deactivated.

Another spring 13, situated between the reaction disc and the dragging pin, has the function to contract when we activate the antitheft device and then to extend, with its elastic strength, when the steering is rotated letting in this way the fork slider 1 insert itself on the rotation axle 1" of the steering column 10. This type of drive of the steering lock is called "automatic", that is it allows the activation of the steering lock antitheft device in any position of the steering. At discretion of the user, if he does not prefer to have the automatic blocking, we can opt for the elimination of the spring 13 allowing the activation only when the fork has found its correct position on the axle of the steering column, keeping the steering straight.

This invention has as object an auxiliary mechanical steering lock antitheft device that has the aim to inhibit the rotation of the steering when this is not authorized, in addition to the possible steering lock usually installed by the manufacturer.

The mechanical steering lock finds complex application because of the many differences and complexities of the steering columns and the dashboards of the motor vehicles, taking into account that the operation of the antitheft device itself must be of easy and handy use by the motorist.

The subject steering lock has the aim to solve these problems, providing a product inhibiting the not authorized rotation of the steering and of easy and handy use.

A further advantage of the device is to provide an antitheft device that can be installed in an easy and quick way avoiding the removal of the steering column.

Such aims have been met by the subject antitheft device and it is sold as assembly kit already predisposed for the installation on the motor vehicle.

In the following we describe the above mentioned antitheft device in a preferred execution, not limiting further development on this field.

As already mentioned the steering lock is an auxiliary device suitable to inhibit the fraudulent rotation of the steering of the vehicle and this mainly occurs thanks to a fork slider 1 shaped 1' that inserts itself directly on the square axle 1" of the steering column 10, so inhibiting its rotation.

The insertion of the fork cursor is driven by the dragging pin 2 that is joined to it through a pin 3.

The peculiarity of this antitheft device is given by the installation of the antitheft device on the steering column that occurs in a quick and easy way, In fact to install the antitheft device it is not necessary to drill, weld or remove the column itself, keeping the absolute originality and functionality of the steering column.

Another peculiarity of this device is the position of the fixed shell placed at 45° with respect to the rotation axis of the steering favouring in this way an easy and handy use.

The device consists mainly of a mobile hardened shell and a fixed support 4. Inside the mobile shell a lock is keyed allowing the blocking.

The whole of the mobile hardened shell and the lock form the padlock 5.

By the side of the mobile hardened shell there are two holes, placed at 180°, inside which some spheres 6 are arranged, driven by the end of the rotor of the lock, that come out from or in to the mobile hardened shell.

To close the mobile shell, there are a dragging pin 2, a cylindrical spring 7 and a jaw 8.

The dragging pin 2 has the function to push the fork slider1, by means of its particular shape and so to activate the antitheft device.

The cylindrical spring 7, placed between the dragging pin and the support, has the function to push the mobile shell out of the fixed shell at the moment when the antitheft device is deactivated.

The jaw 8 closes the antitheft device and anchors it firm to the steering column 10. It is joined to the fixed support 4 by two anti-burglary pins 9 that are arranged in the holes purposely drilled therefore joining the column 10, the fixed support 4 and the jaw 8 itself.

The steering lock is placed preferably at 45° with respect to the axle of the steering column to easy its installation and to avoid the tampering of the structure of the structure of the part below the steering of the motor vehicle.

The installation of the device does not alter the appearance of the interiors.

This invention has as object an auxiliary mechanical steering lock antitheft device that has the aim to inhibit the rotation of the steering when this is not authorized, in addition to the steering lock usually installed by the manufacturer.

Separately and in addition between the mobile shell and the fixed one there is at last a magnetic sensor to which the whole electrical system of the device is connected, possibly including an electronic anti-start system. Such system complies with the Italian Departmental Order of 11/03/97 about the directive 95/96/CE according to which all the motor vehicles equipped with not authorized devices must be equipped with protection devices. This anti-starting system consists of an electronic control station and a visual signaller (LED). The control station inhibits the start of the engine in case of activated steering lock. The LED signals visually the activation of the steering lock: when the steering lock is ON the LED is red; when the device is OFF the LED is green and therefore the vehicle is ready to start.

Furthermore to all this we can add, always at user's discretion and request, a number of electronic devices that further increase the security coefficient of the antitheft device like
- Ultrasound or proximity photocell;
- Anti-lifting device;
- Satellite positioning or localizing device;
- Anti-robbery warning;
- Pager;
- Sound warning.

At discretion of the fitter, who will install the antitheft device by the final user, we can supply the device with the breaking pins placed on the opposite part with respect to the solution shown in the drawings, if he could mean in this way the assembly more handy.

The installation of the device does not alter the appearance of the interiors.
(Figures 1, 2, 3 and 4).

### HOW THE ANTITHEFT DEVICE WORKS

The antitheft device comes in operation when the user, inserting the key 12 into the padlock and making it rotating of 90°, push the mobile part of the device toward the steering column, so overcoming the elastic strength of the spring.

At this point, turning the key, the rotor of the lock pushes outside the mobile hardened shell the spheres that go to insert themselves into the groove situated by limit stop inside the fixed support 4 so allowing the anchorage of the mobile part to the fixed support in a permanent way until the subsequent voluntary deactivation by the user.

Pushing the mobile part of the device, the dragging pin 2 pushes in turn the fork slider 1 toward the square axle 1" of the steering column, therefore inhibiting the turn.

For the deactivation of the antitheft device, it is simply enough to reinsert the key, rotate and by effect of the elastic strength of the spring 7, the antitheft device deactivates itself.

In the rest state the spheres 6 come out again from the mobile shell, inserting themselves into another groove placed inside the fixed support, ensuring then its blocking that avoids accidental insertions by the user.

Between the mobile shell and the fixed one there is at last a magnetic sensor to which the whole electrical system of the device is connected, possibly including an electronic anti-start system.

Such system complies with the Italian Departmental Order of 11/03/97 about the directive 95/96/CE according to which all the motor vehicles equipped with not authorized devices must be equipped with protection devices.

This anti-starting system consists of an electronic control station and a visual signaller (LED).

The control station inhibits the start of the engine in case of activated steering lock.

The LED signals visually the activation of the steering lock: when the steering lock is ON the LED is red; when the device is OFF the LED is green and therefore the vehicle is ready to start.

It represents a valid protection support alone or auxiliary against the fraudulent burglaries, in a simple, sturdy, reliable execution and application form, without the need to have recourse to external means or to other devices that could not work if necessary (electrical, electronic).

## Claims

1. Mechanical steering lock antitheft device for motor vehicles including drive, control and closure means of a blocking slider of the steering column, **characterized by** the fact that said blocking slider consists of a fork bracket (1), driven by a dragging pin (2) of a hardened support (4), jaw shaped (8), said fork (1) of purposely shaped geometry with prismatic section (1') and that said steering column (10) has identical prismatic section (1"), at least along one of its parts, to receive the insertion of said fork (1) to prevent its rotation.

2. Mechanical steering lock antitheft device for motor vehicles according to the Claim 1, **characterized in that** it includes a fixed support (4) on which an axial sliding lock with mobile hardened shell (5) is arranged, a sphere with controlled insertion (6), driven by said lock with mobile hardened shell (5), to block said fork (1') slider (1), pushed by a dragging pin (2), on the square axle (1 ") of the steering column (10) of a motor vehicle, the blocking of the steering column given by said fork slider (1, 1') that inserts itself directly on the square axle (1") of the said steering column (10), inhibiting its rotation.

3. Mechanical steering lock antitheft device for motor vehicles according to the Claim 1 or 2, **characterized by** the fact that it does not need for its operation any electrical or electronic mean of insertion or control and any energy supply from external sources.

4. Mechanical steering lock antitheft device for motor vehicles according to any one of the above Claims from 1 to 3, **characterized by** the fact that it is arranged with a slope ranging between 25° e 45° with respect to the axis of the steering column to easy its installation and at the same time to avoid the tampering of the structure of the structure of the part below the steering of the motor vehicle.

5. Mechanical steering lock antitheft device for motor vehicles according to the Claim 4, where the axis of the dragging pin (2), having a particular geometry suitable to push the fork slider (1) to carry out its insertion (1') on the axle (1") of the steering column (10) through its inclined plane, is arranged with respect to the axis of said fork slider (1) with a slope of 73°, to avoid the alteration of the structure of the dashboard of the vehicle, easing also its installation.

6. Mechanical steering lock antitheft device for motor vehicles according to any one of the above Claims from 1 to 5, **characterized by** the fact to foresee in addition one or more optional equipments alone or in combination among them, like electronic anti-starting device, ultrasound or proximity photocell, anti-lifting device, satellite positioning or localizing device, anti-robbery warning, pager, sound warning.

7. Use of the mechanical hardened steering lock antitheft device for motor vehicles according to any one of the above Claims from 1 to 6, as antitheft protection support against the fraudulent burglaries, in a simple, safe, reliable, independent form, autonomous from any external control mean or energy supply.
